# EUROPÄISCHE PATENTANMELDUNG

(11) **EP 1 637 954 A1**
(43) Veröffentlichungstag der Anmeldung: **22.03.2006**
(21) Anmeldenummer: 04021926.3
(22) Anmeldetag: 15.09.2004
(51) Int. Cl.: G06F 1/00

(54) **Erzeugung anonymisierter Datensätze aus produktiven Anwendungen**

(71) Anmelder: UBS AG, 8001 Zürich (CH)
(72) Erfinder: Dünki, Peter, CH-8004 Zürich (CH); Frei, Christoph, CH-5400 Baden (CH)
(74) Vertreter: Röthinger, Rainer

(57) **Zusammenfassung**

Es wird ein Mechanismus zum computergestützten Erzeugen von anonymisierten Datensätzen für das Entwickeln und Testen von Anwendungsprogrammen, die für den Einsatz in einem produktiven Netzwerk (12) bestimmt sind, beschrieben. Ein erfindungsgemäßes Verfahren umfasst das Bereitstellen wenigstens einer produktiven Datenbank (14) mit zu anonymisierenden produktiven Datensätzen, welche statische und nicht-statische Datenelemente enthalten, wobei die nicht-statischen Datenelemente von Anwendungsprogrammen im produktiven Umfeld (12) erzeugt und/oder bearbeitet werden und wobei die statischen Datenelemente im produktiven Umfeld (12) im Wesentlichen unveränderlich sind. Das Verfahren umfasst außerdem das Auslesen einer Mehrzahl von produktiven Datensätzen aus der produktiven Datenbank (14) und das Erzeugen von anonymisierten Datensätze durch Ersetzen wenigstens einiger der statischen Datenelemente eines ersten produktiven Datensatzes mit den entsprechenden statischen Datenelementen eines zweiten produktiven oder historisierten produktiven Datensatzes. Die anonymisierten Datensätze werden anschließend in ein Entwicklungs- oder Testumfeld (27) überführt.

## Beschreibung

### Gebiet der Erfindung

Die Erfindung betrifft das Gebiet der Datenanonymisierung. Genauer gesagt betrifft die Erfindung das Erzeugen anonymisierter Datensätze für das Entwickeln und Testen von Computeranwendungen (nachfolgend als Anwendungen bezeichnet).

### Hintergrund der Erfindung

Das Entwickeln und Testen neuer Anwendungen erfordert das Vorhandensein von Daten, welche von den neuen Anwendungen bei Probeläufen verarbeitet werden können. Um den Ergebnissen der Probeläufe einen verlässlichen Aussagegehalt beimessen zu können, ist es unerlässlich, dass die bei den Probeläufen verarbeiteten Daten in technischer Hinsicht (z.B. was das Datenformat angeht) denjenigen Daten entsprechen, welche von den neuen Anwendungen im Anschluss an die Entwicklungs- und Testphase verarbeitet werden sollen. Aus diesem Grund werden im Rahmen der Probeläufe häufig diejenigen Anwendungsdaten, welche von den gegenwärtig produktiven (Vorgänger-)Versionen der zu entwickelnden oder zu testenden Anwendungen erzeugt wurden, verwendet. Diese Daten, im Folgenden als produktive Anwendungsdaten oder einfach als produktive Daten bezeichnet, sind üblicherweise datensatzweise in Datenbanken abgelegt.

Der Einsatz produktiver Anwendungsdaten für Entwicklungs- und Testzwecke ist in der Praxis nicht unproblematisch. So hat sich herausgestellt, dass die den Entwicklern aufgrund ihrer jeweiligen Autorisierung in der produktiven Umgebung zur Verfügung stehenden Datenräume oftmals nicht groß genug sind, um verlässliche Ergebnisse zu erhalten. Auch variieren aufgrund der personenbezogenen Datenraumautorisierungen die Ergebnisse von Probeläufen von Entwickler zu Entwickler. Zwar ließe sich die Datenraum-Autorisierung einzelner Personen für die Probeläufe temporär erweitern; diese Maßnahme ist jedoch aufwändig und insbesondere bei sensiblen oder vertraulichen Daten nicht ohne weitere Überprüfungen oder Einschränkungen möglich.

Ein anderer Ansatz hinsichtlich der Verwendung sensibler oder vertraulicher produktiver Anwendungsdaten im Rahmen von Probeläufen besteht darin, die Probeläufe an einem abgeschotteten und zugriffsgeschützten zentralen Erprobungssystem durchzuführen. Der mit der Einrichtung eines solchen zentralen Erprobungssystems verbundene technische Aufwand ist jedoch hoch. Zudem gestattet eine solche Vorhergehensweise keine Datenlieferung auf (dezentrale) Entwicklungs- und Testsysteme zur Fehleranalyse.

Die oben erläuterten und weitere Nachteile haben zu der Erkenntnis geführt, dass die Verwendung produktiver Daten für Entwicklungs- und Testzwecke in vielen Fällen ausscheidet. Es wurde daher nach einer Alternative für die Verwendung produktiver Daten gesucht. Diese Alternative sollte einerseits hinsichtlich des Datenformats, des Dateninhalts, usw. ein realistisches Abbild der produktiven Daten darstellen. Auf der anderen Seite sollten die zusätzlichen technischen Vorkehrungen, insbesondere was den Schutz gegen unberechtigte Zugriffe anbelangt (Autorisierungsmechanismen, Firewalls, usw.), möglichst gering gehalten werden können.

Es hat sich herausgestellt, dass die oben aufgeführten Anforderungen durch Testdaten erfüllt werden, welche durch eine teilweise Anonymisierung (oder Maskierung) von produktiven Datensätzen erzeugt werden. Indem sensible Elemente der produktiven Daten anonymisiert werden, sinkt der potentielle Schaden, der bei unberechtigten Zugriffen zu befürchten wäre. Dies gestattet es, die Sicherheitsmechanismen zu lockern. Insbesondere können die Testdaten für Probeläufe und zur Fehleranalyse auf dezentrale Systeme geladen werden. Da aber andererseits die technischen Aspekte (Datenformat, usw.) der produktiven Anwendungsdaten durch einen geeignete Anonymisierungsmechanismus nicht oder nur geringfügig geändert werden müssen, bilden die anonymisierten Testdaten ein realistisches Abbild der produktiven Daten.

Das Anonymisieren eines Datensatzes kann dadurch erfolgen, dass die zu anonymisierenden Datenelemente gelöscht oder durch einen vordefinierten und für alle Datensätze identischen Standardtext überschrieben werden, während die nicht zu anonymisierenden Datenelemente unverändert beibehalten werden. Eine solche Vorhergehensweise führt zu anonymisierten Datensätzen, ohne dass sich (wesentliche) Änderungen des Datenformats ergeben würden. Es hat sich jedoch herausgestellt, dass Probeläufe unter Verwendung derart anonymisierter Datensätze nicht alle Schwachstellen der zu entwickelnden oder zu testenden Anwendung aufzeigen und bei ersten Einsätzen der Anwendung im produktiven Umfeld häufig noch Fehler auftreten.

Das Auftreten von Fehlern im produktiven Umfeld, die in der Regel auf eine fehlerhafte Programmierung der Anwendung zurückzuführen sind, ist Beleg dafür, dass die bei den Probeläufen im Entwicklungs- und Testumfeld verwendeten anonymisierten Daten (noch) nicht in ausreichendem Maß mit den produktiven Daten übereinstimmen. Häufiger als im produktiven Umfeld treten programmiertechnische Fehler im Entwicklungs- und Testumfeld auf. Diese Tatsache erfordert daher das Vorhandensein effektiver Fehleranalysemechanismen.

Der Erfindung liegt die Aufgabe zugrunde, einen effizienten Ansatz für die Bereitstellung anonymisierter Testdaten anzugeben. Die Testdaten sollen aus den oben genannten Gründen ein möglichst getreues Abbild der produktiven Daten sein und außerdem eine zuverlässige Fehleranalyse ermöglichen. Insgesamt ist der Aussagegehalt von Probeläufen unter Verwendung der anonymisierten Testdaten zu verbessern und die Ausfallwahrscheinlichkeit neu entwickelter oder weiterentwickelter Anwendungen im produktiven Umfeld zu verringern.

### Kurzer Abriss der Erfindung

Diese Aufgabe wird gemäß einem ersten Aspekt der Erfindung durch ein Testdaten-Anonymisierungsverfahren gelöst, das anonymisierte Datensätze für das Entwickeln und Testen von Anwendungsprogrammen erzeugt, die für den Einsatz in einem produktiven Umfeld bestimmt sind. Das Verfahren umfasst die Schritte des Bereitstellens wenigstens einer produktiven Datenbank mit zu anonymisierenden produktiven Datensätzen, welche statische und nicht-statische Datenelemente enthalten, wobei die nicht-statischen Datenelemente von Anwendungsprogrammen im produktiven Umfeld erzeugt und/oder bearbeitet werden und wobei die statischen Datenelemente im produktiven Umfeld im Wesentlichen unveränderlich sind, des Auslesens einer Mehrzahl von produktiven Datensätzen aus der produktiven Datenbank, des Erzeugens von anonymisierten Datensätze durch Ersetzen wenigstens einiger der statischen Datenelemente eines ersten produktiven Datensatzes mit den entsprechenden statischen Datenelementen eines zweiten produktiven oder historisierten produktiven Datensatzes und des Überführens der anonymisierten Datensätze in ein Entwicklungs- und/oder Testumfeld.

Die Datensatz-Anonymisierung erfolgt also durch ein "Mischen" der Datenelemente zweier oder mehr verschiedener produktiver (oder ehemals produktiver) Datensätze. Gemäß dieser Vorgehensweise bleiben die statistischen Eigenschaften der produktiven Datensätze bei den anonymisierten Datensätzen zumindest im Wesentlichen erhalten. Vor allem Bearbeitungsschritte, die dateninhaltsabhängig sind (beispielsweise Sortieralgorithmen), können aufgrund der Beibehaltung der statistischen Eigenschaften zuverlässiger getestet werden.

Die zu Anonymisierungszwecken miteinander kombinierten produktiven Datensätze können gemäß einer ersten Variante alle unmittelbar der produktiven Datenbank entstammen. Gemäß einer zweiten Variante entstammt lediglich ein Teil der produktiven Datensätze unmittelbar der produktiven Datenbank. Ein weiterer Teil entstammt z.B. einer Historisierungs-Datenbank, welche (bereits früher per einem definierten Zeitpunkt ausgelesene) Kopien von in der produktiven Datenbank enthaltenen produktiven Datensätze (oder zumindest von darin enthaltenen produktiven statischen Datenelementen), also historisierte produktive Datensätze, enthält. Diese Maßnahme gestattet es, die anonymisierten Datensätze durch Ersetzen der statischen Datenelemente eines ersten produktiven Datensatzes mit den entsprechenden statischen Datenelementen eines zweiten historisierten produktiven Datensatzes zu erzeugen. Auf diese Weise werden zur Anonymisierung produktive nicht-statische Datenelemente mit historisierten statischen Datenelementen kombiniert.

Um den Anonymisierungsgrad zu erhöhen, können bei der Anonymisierung den produktiven Daten externe (z.B. öffentlich zugängliche) Daten beigemischt werden. So können statische Datenelemente, die von außerhalb des produktiven Umfelds bezogen wurden, bereitgestellt werden und die anonymisierten Datensätzen durch Ersetzen wenigstens einiger der statischen Datenelemente des ersten oder eines dritten produktiven Datensatzes mit entsprechenden statischen Datenelementen von außerhalb des produktiven Umfelds erzeugt werden. Häufig reicht es zur Erzielung eines zufriedenstellenden Anonymisierungsgrads aus, weniger als ungefähr 25%, vorzugsweise weniger als ca. 10%, der anonymisierten Datensätze auf der Grundlage der von außerhalb des produktiven Umfelds bezogenen statischen Datenelemente zu erzeugen.

Um eine schnelle Erstellung der anonymisierten Datensätze zu ermöglichen (und um die produktiven Datenbanken möglichst kurzzeitig mit Lesezugriffen zu belasten), können die produktiven Datensätze in flache Dateien ausgelesen werden. Durch Bearbeiten der in die flachen Dateien ausgelesenen produktiven Datensätze lassen sich dann die anonymisierten Datensätze erzeugen. Die anonymisierten Datensätze können auch in Form von flachen Dateien in das Entwicklungs- und Testumfeld (z.B. in eine Entwicklungs- und Testdatenbank) geladen werden. Die Entwicklungs- und Testdatenbank weist vorzugsweise dieselbe Struktur wie die produktive Datenbank auf.

Bei nicht-statischen Datenelementen handelt es sich vorzugsweise um sehr kurzlebige Datenelemente, die üblicherweise lediglich für den Ablauf einer individuellen Transaktion erforderlich sind. Typische OLTP (Online Transaction Processing)-Systeme sind ausgelegt, um viele Tausende oder sogar Millionen einzelner kleiner Transaktionen pro Tag zu prozessieren. Jedenfalls in nicht-kondensierter Form sind die nicht-statischen Datenelemente daher nur kurze Zeit verfügbar (obwohl sie aus Gründen der Nachvollziehbarkeit einzelner Transaktionen in der Regel in kondensierter Form gesichert werden). Die statischen Datenelemente können im Vergleich zu lediglich transaktionsaktuellen nicht-statischen Datenelemente zeitlich deutlich langlebiger sein. Aus diesem Grund werden in der Regel viele Datensätze identische statische Datenelemente aber transaktionsbezogen unterschiedliche nicht-statische Datenelemente aufweisen. Trotz ihrer Langlebigkeit können auch die statischen Datenelemente Manipulationen unterliegen, die jedoch im Vergleich zur Lebensdauer typischer transaktionsbezogener nicht-statischer Datenelemente äußerst selten auftreten.

Bei den nicht-statischen Datenelementen kann es sich typischerweise um numerische Werte handeln, die von den Anwendungen manipuliert werden. Bei den statischen Datenelementen kann es sich um identitätsbezogene Daten handeln. Dazu zählen beispielsweise Namens- oder Adressangaben, Identifikationsnummern (wie Personalnummern oder Kontonummern), usw.

Obwohl es denkbar ist, dass der gesamte Inhalt der produktiven Datenbank anonymisiert und ins Test- und Entwicklungsumfeld überführt wird, reicht es in der Praxis häufig aus, nur einen Teil der produktiven Datensätze (z.B. bis ca. 30% oder 50%) für Entwicklungs- und Testzwecke zu anonymisieren. Es können daher Selektionskriterien bereitgestellt werden, um die die Selektionskriterien erfüllenden produktiven Datensätzen oder produktiven Datenelemente aus der produktiven Datenbank selektiv auslesen zu können.

Vorzugsweise erfolgt das Auslesen der produktiven Datensätzen aus der produktiven Datenbank unterbrechungslos, um eine Momentaufnahme des Datenbankinhalts und insbesondere der produktiven Datensätze zu erhalten. Die anonymisierten Datensätze können auf der Grundlage von Änderungen der produktiven Datensätze (insbesondere der nicht-statischen produktiven Datenelemente) beispielsweise in bestimmten Zeitintervallen aktualisiert werden. Die Verwendung einer Historisierungs-Datenbank, in der wenigstens die statischen produktiven Datenelemente historisiert werden, ermöglicht es, bei der Erzeugung der anonymisierten Datensätze den nicht-statischen Datenelementen eines produktiven Datensatzes immer dieselben, aus der Historisierungs-Datenbank ausgelesenen statischen Datenelemente zuzuordnen. Diese Maßnahme erhöht die Aussagekraft der im Entwicklungs- und Testumfeld erhaltenen Aussagen.

Die statischen Datenelemente und die nicht-statischen Datenelemente eines produktiven Datensatzes können in getrennten produktiven Datenbanken enthalten und miteinander verknüpft sein. Diese Maßnahme gestattet es beispielsweise, maßgeschneiderte Datenbank- und Sicherungs-Konzepte für die unterschiedlich langlebigen Datenelemente vorzusehen. Ferner ist es denkbar, dass eine Mehrzahl von produktiven Datensätzen mit identischen statischen Datenelemente aber unterschiedlichen nicht-statischen Datenelemente existiert. In diesem Fall unterstützt die Verwendung getrennter Datenbanken, dass statische Datenelemente redundanzfrei gespeichert werden.

Die Erfindung kann als Software oder als Hardware oder als eine Kombination dieser beiden Aspekte ausgeführt sein. So wird gemäß einem weiteren erfindungsgemäßen Aspekt ein Computerprogrammprodukt mit Programmcodemitteln zum Durchführen des erfindungsgemäßen Verfahrens, wenn das Computerprogrammprodukt auf einem oder mehreren Computern ausgeführt wird, zur Verfügung gestellt. Das Computerprogrammprodukt kann auf einem computerlesbaren Datenträger gespeichert sein.

Gemäß einem Hardware-Aspekt der Erfindung wird ein Computersystem zum Erzeugen von anonymisierten Datensätzen für das Entwickeln und Testen von Anwendungsprogrammen, die für den Einsatz in einem produktiven Umfeld bestimmt sind, geschaffen. Das Computersystem umfasst wenigstens eine produktive Datenbank mit zu anonymisierenden produktiven Datensätzen, welche statische und nicht-statische Datenelemente enthalten, wobei die nicht-statischen Datenelemente von Anwendungsprogrammen im produktiven Umfeld erzeugt und/oder bearbeitet werden und wobei die statischen Datenelemente im produktiven Umfeld im Wesentlichen unveränderlich sind, einen Computer zum Auslesen einer Mehrzahl von produktiven Datensätzen aus der produktiven Datenbank und zum Erzeugen von anonymisierten Datensätze durch Ersetzen wenigstens einiger der statischen Datenelemente eines ersten produktiven Datensatzes mit den entsprechenden statischen Datenelementen eines zweiten produktiven oder historisierten produktiven Datensatzes und eine Schnittstelle zum Überführen der anonymisierten Datensätze in ein Entwicklungs-oder Testumfeld.

### Kurze Zusammenfassung der Zeichnungen

Weitere Vorteile und Ausgestaltungen der Erfindung werden nachfolgend unter Bezugnahme auf bevorzugte Ausführungsbeispiele sowie auf die beigefügten Zeichnungen näher erläutert. Es zeigt:
- Figur 1: ein Ausführungsbeispiel eines erfindungsgemäßes Computersystem zum Erzeugen anonymisierter Datensätze;
- Figur 2: ein schematisches Ablaufdiagramm des erfindungemäßen Verfahrens zum Erzeugen anonymisierter Datensätze;
- Figur 3: eine schematische Darstellung der Erzeugung anonymisierter Datensätze gemäß einem ersten Ausführungsbeispiel; und
- Figur 4: eine schematische Darstellung der Erzeugung anonymisierter Datensätze gemäß einem zweiten Ausführungsbeispiel; und

### Beschreibung bevorzugter Ausführungsbeispiele

Nachfolgend wird die Erfindung unter Bezugnahme auf bevorzugte Ausführungsbeispiele näher erläutert. Obwohl eines der erläuterten Ausführungsbeispiele auf die Erzeugung von anonymisierten Datensätzen mit realistischen Adressbildern gerichtet ist, ist darauf hinzuweisen, dass die Erfindung nicht auf dieses Einsatzgebiet beschränkt ist. Die Erfindung kann beispielsweise überall dort zum Einsatz gelangen, wo Anwendungen zuverlässig und mit einem effizienten Fehleranalysemechanismus getestet werden sollen.

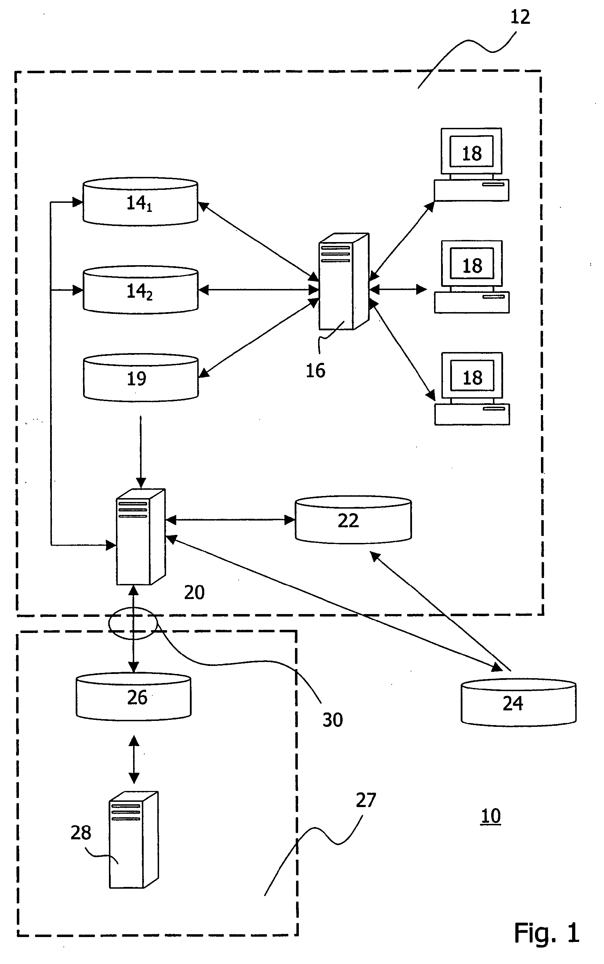

Fig. 1 zeigt ein Ausführungsbeispiel eines erfindungsgemäßen Computersystems 10 zum Erzeugen von anonymisierten Datensätzen für das Entwickeln und Testen von Anwendungsprogrammen. Bei den verschiedenen Ausführungsbeispielen sind übereinstimmende Elemente und Komponenten jeweils mit übereinstimmenden Bezugszeichen versehen.

Das Computersystem 10 umfasst gemäß dem in Fig. 1 dargestellten Ausführungsbeispiel ein produktives Computernetzwerk 12 mit einer Mehrzahl von produktiven Datenbanken 14, wenigstens einem Anwendungs-Server 16 sowie einer Vielzahl von Computerterminals 18. Auf dem Anwendungs-Server 16 laufen mehrere Anwendungsprogramme, deren Dienste der Anwendungs-Server 16 den Computerterminals 18 im produktiven Netzwerk 12 zur Verfügung stellt. Der Anwendungs-Server 16 ermöglicht außerdem als Datenbank-Server Zugriff auf in den produktiven Datenbanken 14 enthaltene (produktive) Datensätze. Die logisch zusammengehörenden Datenelemente (oder Daten) eines solchen Datensatzes können über mehrere produktive Datenbanken 14 verteilt sein. So können statische Datenelemente der produktiven Datensätze in einer ersten produktiven Datenbank 14₁ und nicht-statische Datenelemente der produktiven Datensätze in einer zweiten produktiven Datenbank 14₂ gespeichert und gepflegt werden. Das produktive Netzwerk 12 und insbesondere die produktiven Datenbanken 14 sind durch eine Reihe von Sicherheitsmechanismen gegen unbefugte Zugriffe geschützt. Diese Sicherheitsmechanismen beinhalten Authentisierungskonzepte sowie benutzerabhängige Datenraumautorisierungen.

In dem produktiven Netzwerk 12 wird von den auf dem Anwendungs-Server 16 laufenden Anwendungsprogrammen bestimmungsgemäßer Gebrauch gemacht. Dies bedeutet, dass ständig produktive Anwendungsdaten zwischen dem Anwendungs-Server 16 und den produktiven Datenbanken 14 einerseits und dem Anwendungs-Server 16 und den Computerterminals 18 andererseits transferiert werden. Diese produktiven Daten haben demgemäß eine durch die auf dem Anwendungs-Server 16 laufenden Anwendungsprogramme definierte Zweckbestimmung. So kann es sich bei den Anwendungsprogrammen um Maschinensteuerungen, um adressbasierte Anwendungen (z.B. zur Erzeugung von Drucksachen), um Komponenten eines ERP-(Enterprise Resource Planning) Systems, um ein CAD-(Computer Aided Design) Programm, usw. handeln. Die eigentliche Zweckbestimmung der Anwendungsdaten tangiert nicht den Umfang dieser Erfindung.

Ferner ist im produktiven Netzwerk 12 eine Zuordnungs-Komponente 19 vorhanden, welche im Ausführungsbeispiel gemäß Fig. 1 als Datenbank angedeutet ist und deren Funktion später genauer beschrieben wird. Je nach vorgesehenem Zuordnungsmechanismus kann die Zuordnungs-Komponente 19 auch als Datei, als kryptographische Programmroutine, usw. ausgebildet werden. Eine geeignete Autorisierung vorausgesetzt, kann mittels einiger der Computerterminals 18 über den Anwendungs-Server 16 auf die Zuordnungs-Komponente 19 zugegriffen werden.

In dem in Figur 1 dargestellten Beispielfall umfasst das Computersystem 10 ferner einen innerhalb des produktiven Netzwerks 12 angeordneten Anonymisierungscomputer 20 mit Zugriff auf die Zuordnungs-Komponente 19 sowie auf drei weitere Datenbanken, nämlich auf eine nicht-produktive Historisierungs-Datenbank 22 mit historisierten produktiven Datensätzen (aus Gründen der Zugriffskontrolle noch im produktiven Netzwerk angeordnet), eine öffentlich zugängliche elektronische Datenbank 24 mit öffentlichen Datensätzen sowie wenigstens eine Testdatenbank 26 mit anonymisierten Datensätzen. Der Anonymisierungscomputer 20 hat Lesezugriff auf die produktiven Datenbanken 14, die Zuordnungs-Komponente 19 und die öffentlich zugängliche elektronische Datenbank 24 sowie Schreib-/Lese-Zugriff auf die Historisierungs-Datenbank 22 und die Testdatenbank 26.

Der funktionale Unterschied zwischen den produktiven Datenbanken 14 und der nicht-produktiven Historisierungs-Datenbank 22 besteht im Wesentlichen darin, dass die Inhalte der produktiven Datenbanken 14 durch den Anwendungsserver (fortlaufend) manipulierbar sind, während die nicht-produktive Datenbank 22 eine "Datenkonserve" darstellt, welche von den auf dem Anwendungsserver 16 laufenden Anwendungsprogrammen bei ihrem bestimmungsgemäßen Gebrauch nicht benötigt wird.

Die öffentlich zugängliche elektronische Datenbank 24 und die Testdatenbank 26 befinden sich in Figur 1 außerhalb des produktiven Netzwerks 12. Genauer gesagt ist die Testdatenbank 26 innerhalb eines Entwicklungs- und Testumfelds in Form eines Computer-Netzwerks 27 angeordnet. Eine Schnittstelle 30 ermöglicht ein Überführen anonymisierter Datensätze aus dem produktiven Netzwerk 12 in die Testdatenbank 26 und damit in das Netzwerk 27. Das Netzwerk 27 gleicht in seinem Aufbau dem produktiven Netzwerk 12 und umfasst einen Anwendungs-Server 28 für Entwicklungs- und Testzwecke. Der Anwendungs-Server 28 hat Zugriff auf die Testdatenbank 26. Die Testdatenbank 26 kann ähnlich wie die produktiven Datenbanken 14 strukturiert sein. Um ein optimales Testen neuer oder verbesserter Anwendungen zu ermöglichen, kann die Datenbank 26 einen identischen Aufbau wie die produktiven Datenbanken 14 besitzen. Dies kann erfordern, die Datenbank 26 in einzelne, physisch getrennte Datenbanken aufzuspalten.

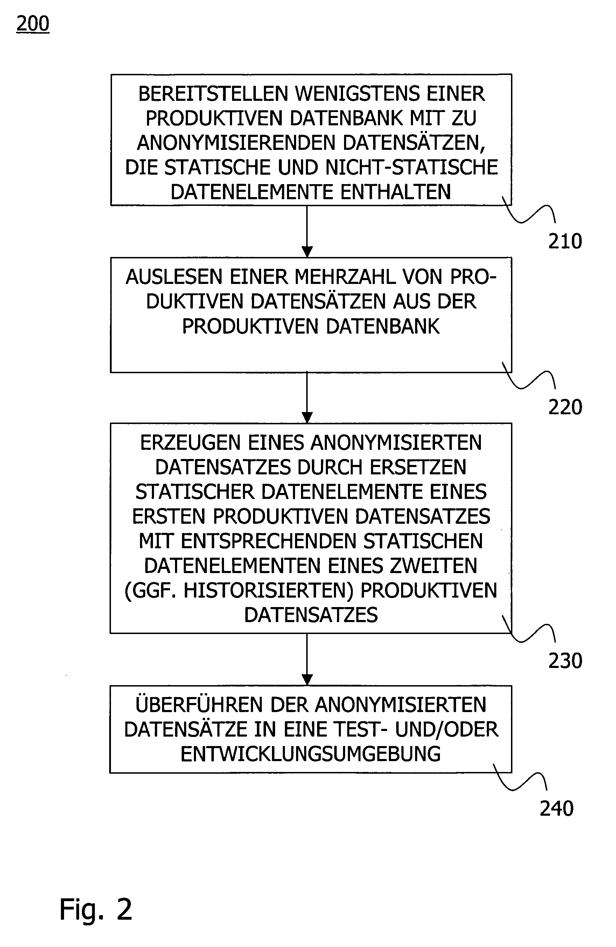

Die Funktionsweise des in Figur 1 dargestellten Computersystems 10 beim Erzeugen anonymisierter Datensätze gemäß dem erfindungsgemäßen Anonymisierungsverfahren wird nun unter Bezugnahme auf das in Figur 2 dargestellte Flussdiagramm 200 näher erläutert.

Das Verfahren beginnt mit dem Bereitstellen der produktiven Datenbanken 14 mit zu anonymisierenden produktiven Datensätzen in Schritt 210. Die produktiven Datensätze bestehen aus einzelnen Datenelementen. Genauer gesagt umfassen die Datensätze statische und nicht-statische Datenelemente. Die statischen Datenelemente sind im produktiven Netzwerk 12 im Wesentlichen unveränderlich, d.h. sie werden nicht oder nur sporadisch von den auf dem Anwendungs-Server 16 laufenden Anwendungen manipuliert (erzeugt, gelöscht, verändert, usw.). Die nicht-statischen Datenelemente sind hingegen im Vergleich zu den statischen Datenelementen sehr kurzlebig und werden von den Anwendungsprogrammen im produktiven Netzwerk 12 bestimmungsgemäß und fortlaufend erzeugt, gelöscht, bearbeitet, usw. Aus diesem Grund sind es in erster Linie die nicht-statischen Daten, welche für Entwicklungs- und Testzwecke von Interesse sind (und daher nicht anonymisiert werden sollten). Die statischen Daten hingegen bedürfen aufgrund ihrer Permanenz häufig einer Anonymisierung, insbesondere wenn sie identitätsbezogene Inhalte besitzen.

In Schritt 220 wird eine Mehrzahl von produktiven Datensätzen aus den produktiven Datenbanken 14 ausgelesen. Dem Auslesen kann ein auf z.B. benutzerdefinierten Selektionskriterien beruhender Selektionsmechanismus zugrunde liegen. Dieser Selektionsmechanismus berücksichtigt, dass es für Entwicklungs- und Testzwecke häufig nicht erforderlich ist, sämtliche produktiven Datensätze zu anonymisieren und in das Entwicklungs- und Testumfeld überzuführen. Häufig reichen ca. 15 bis 50%, vorzugsweise ungefähr 30%, der produktiven Datensätze aus, um zuverlässige Aussagen im Entwicklungs- und Testumfeld treffen zu können.

Das Auslesen in Schritt 220 kann derart erfolgen, dass die ausgelesenen Daten eine Momentaufnahme der produktiven Datenbanken 14 darstellen. Mit anderen Worten, das Auslesen erfolgt vorzugsweise in einem möglichst kurz gehaltenem Zeitraum, in dem zumindest Schreibzugriffe auf die Datenbanken 14 (weitestgehend) unterbunden sind. Die produktiven Datensätze werden aus Effizienzgründen in eine oder mehrere flache (einfach strukturierte) Dateien ausgelesen und dort weiter bearbeitet, also insbesondere anonymisiert.

Das Anonymisieren der ausgelesenen Datensätze erfolgt in Schritt 230. Hierzu werden wenigstens einige der statischen Datenelemente eines ersten produktiven Datensatzes durch die entsprechenden statischen Datenelemente eines zweiten produktiven oder historisierten produktiven Datensatzes ersetzt. Dieses Ersetzen kann in den oben erwähnten flachen Dateien erfolgen. Zweckmäßigerweise entstammen die statischen Datenelemente des zweiten produktiven Datensatzes der Historisierungs-Datenbank 22. Einige der anonymisierten Datensätze können auch dadurch erzeugt werden, dass statische Datenelemente des zu anonymisierenden produktiven Datensatzes durch statische Datenelemente ersetzt werden, die der öffentlich zugänglichen elektronischen Datenbank 24 entstammen. Erforderlichenfalls können auch einige der nicht-statischen Datenelemente (insbesondere Fließtext) anonymisiert werden. Die nicht-statischen Datenelemente lassen sich beispielsweise durch Dummy-Daten ersetzen.

In Schritt 240 werden die in Schritt 230 anonymisierten Datensätze in das Entwicklungs- und Testumfeld 27, genauer gesagt in die Test-Datenbank 26, übergeführt. Dieses Überführen kann in Form der oben erläuterten flachen Datei erfolgen, deren Inhalte in die Test-Datenbank 26 eingeschrieben werden. Ferner kann ein Aktualisierungsmechanismus vorgesehen werden, der es gestattet, Änderungen der produktiven Datensätze in den anonymisierten Datensätzen nachzutragen. Der Aktualisierungsmechanismus kann in regelmäßigen Zeitabständen oder benutzerinitiiert aufgerufen werden.

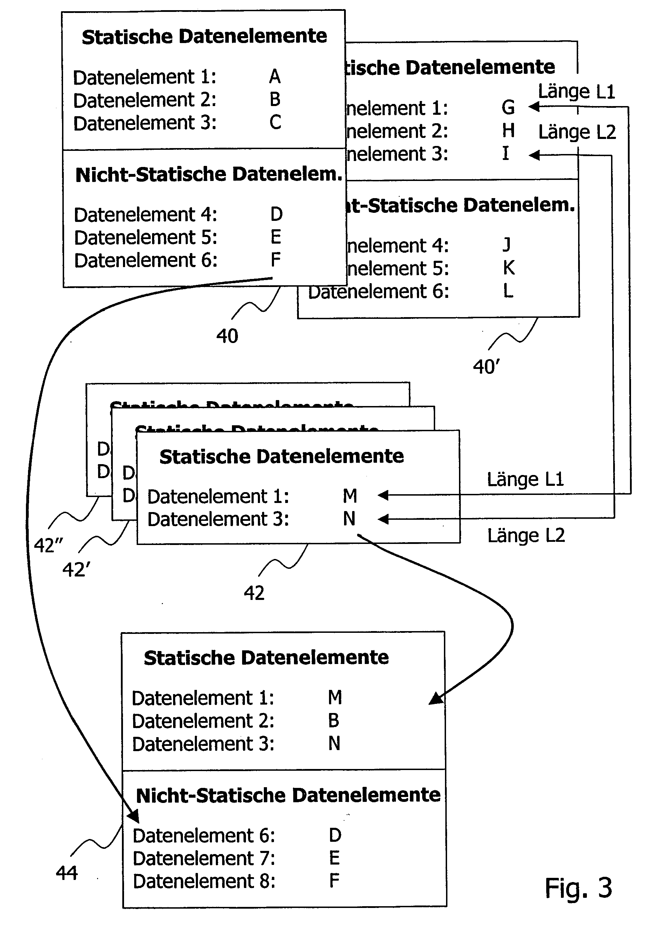

Fig. 3 zeigt eine schematische Darstellung eines Ausführungsbeispiels für die Erzeugung anonymisierter Datensätze unter Verwendung von in den produktiven Datenbanken 14 enthaltenen produktiven Datensätzen 40, 40' einerseits und von in der Historisierungs-Datenbank 22 enthaltenen Datensätzen 42, 42', 42" andererseits.

Die in der Historisierungs-Datenbank 22 enthaltenen Datensätze können auf unterschiedliche Art und Weise erzeugt worden sein. Gemäß einer ersten Variante wurden diese Datensätze durch Kopieren von produktiven Datensätzen (oder zumindest von darin enthaltenen Datenelementen) erzeugt. Gemäß einer zweiten Variante umfasst die Historisierungs-Datenbank 22 Datensätze, welche hinsichtlich der darin enthaltenen Datenelemente den produktiven Datenbanken 14 und der öffentlich zugänglichen elektronischen Datenbank 24 entstammen. Es wird auf diese Weise ein Unsicherheitsfaktor dahingehend erzeugt, dass im Entwicklungs- und Testumfeld anhand eines anonymisierten Datensatzes kein eindeutiger Rückschluss auf die Existenz eines produktiven Datensatzes (und zugehöriger produktiver Datenelemente) mehr möglich ist.

In Fig. 3 oben sind exemplarisch zwei produktive Datensätze 40, 40' dargestellt. Jeder dieser Datensätze 40, 40' umfasst eine Mehrzahl produktiver Datenelemente (A, B, C, ...), die von den auf dem Anwendungs-Server 16 laufenden Anwendungsprogrammen manipuliert (erzeugt, geändert, gelöscht, usw.) und verarbeitet werden können.

Die Datenelemente sind in dem in Fig. 3 dargestellten Beispielfall in statische Datenelemente (oder Stammdaten) und nicht-statische Datenelemente (oder Bewegungsdaten) unterteilt. Bei einem statischen Datenelement kann es sich beispielsweise um ein Ereignis-Datum (z.B. eine Tages- oder Jahresangabe), um einen Namen, einen Identifikations-Code, eine Adressangabe, einen Sollwert, usw. handeln. Die nicht-statischen Datenelemente werden hingegen von den auf dem Anwendungs-Server 16 laufenden Anwendungsprogrammen fortlaufend manipuliert, bilden also beispielsweise die Eingabe- oder Ausgabeparameter dieser Anwendungsprogramme. Bei dem Ausführungsbeispiel gemäß Fig. 3 wird angenommen, dass lediglich einige der statischen Datenelemente der produktiven Datensätze zu anonymisieren sind, während die nicht-statischen Datenelemente keiner Anonymisierung bedürfen und unverändert in der Entwicklungs- und Testumgebung zur Verfügung stehen sollen.

Den einzelnen Datenelementen ist jeweils eine Kennung in Form einer Zahl zwischen 1 und 6 zugeordnet. Korrespondierende Kennungen werden sowohl für die produktiven Datensätze 40, 40' als auch für die historisierten Datensätze 42, 42', 42" verwendet. Diese Vorhergehensweise ermöglicht es, zu anonymisierende produktive Datenelemente durch historisierte Datenelemente mit einer korrespondierenden Kennung zu ersetzen.

Die historisierten Datensätze 42, 42', 42" umfassen im Beispielfall gemäß Fig. 3 nur solche Datenelemente, welche zum Anonymisieren der produktiven Datensätze benötigt werden. Da bei dem Ausführungsbeispiel gemäß Fig. 3 lediglich die produktiven Datenelemente mit den Kennungen 1 und 3 anonymisiert werden müssen, enthalten die historisierten Datensätze 42, 42', 42" zur Verringerung des Speicherplatzbedarfs jeweils lediglich Datenelemente mit den Kennungen 1 und 3. Gemäß einer Abwandlung des Ausführungsbeispiels gemäß Fig. 3 wäre es jedoch möglich, dass die historisierten Datensätze 42, 42', 42" dasselbe Format wie die oben erläuterten produktiven Datensätze 40, 40' aufweisen (d.h. statische und nicht-statische Datenelemente wie die produktiven Datensätze 40, 40' umfassen). In diesem Fall würden nur die zu Anonymisierungszwecken benötigten Datenelemente (hier mit den Kennungen 1 und 3) aus den historisierten Datensätzen ausgelesen und in die jeweils zu erzeugenden anonymisierten Datensätze übernommen.

Wie sich aus Fig. 3 ergibt, stimmt der historisierte Datensatz 42 hinsichtlich der Zeichenkettenlängen der darin enthaltenen Datenelemente 1 und 3 mit dem produktiven Datensatz 40' überein. Mit anderen Worten, sowohl das Datenelement G mit der Kennung 1 des produktiven Datensatzes 40' als auch das Datenelement M mit der Kennung 1 des historisierten Datensatzes 42 besitzen beide die gleiche Zeichenkettenlänge L1. Ferner weisen sowohl das Datenelement I (Kennung 3) des produktiven Datensatzes 50' als auch das im Datenelement N (Kennung 3) des historisierten Datensatzes 42 jeweils die übereinstimmende Länge L2 auf. In der Historisierungs-Datenbank 22 ist der Datensatz 42 jedoch nicht einzigartig hinsichtlich des Vorhandenseins eines Datenelements der Kennung 1 mit Länge L1 und des Datenelements 3 mit einer Länge L2. Vielmehr ist in der Historisierungs-Datenbank 22 wenigstens ein weiterer Datensatz (z.B. Datensatz 42' und/oder Datensatz 42") vorhanden, der ebenfalls ein Datenelement der Kennung 1 mit der Länge L1 und ein Datenelement der Kennung 3 mit der Länge L2 aufweist.

Die Erzeugung eines in Fig. 3 dargestellten anonymisierten Datensatzes 44 auf der Grundlage der produktiven Datensätze 40, 40' und der historisierten Datensätze 42, 42' und 42" läuft nun folgendermaßen ab. In einem ersten Schritt wird aus den produktiven Datenbanken 14 (z.B. auf der Grundlage eines benutzerdefinierbaren Selektionsmechanismus) wenigstens ein produktiver Datensatz ermittelt, der anonymisiert und als anonymisierter Datensatz in die Testdatenbank 26 übergeführt werden soll. Dies ist in Fig. 3 beispielhaft für den produktiven Datensatz 40 dargestellt. Es wird wiederum davon ausgegangen, dass die Datenelemente mit den Kennungen 1 und 3 der produktiven Datensätze zu anonymisieren sind. Bei dem Datensatz 40 gemäß Fig. 3 handelt es sich hierbei also um die Datenelemente A und C. Diese beiden Datenelemente A und C sind durch Datenelemente mit korrespondierenden Kennungen eines der historisierten Datensätze 42, 42' und 42" zu ersetzen.

Für den aus den produktiven Datenbanken 14 herausgegriffenen produktiven Datensatz 40 ist nun in einem nächsten Schritt ein diesem Datensatz 40 zugeordneter Datensatz aus der Historisierungs-Datenbank 22 zu ermitteln (dessen Datenelemente mit den Kennungen 1 und 3 die Datenelemente mit den korrespondierenden Kennungen des Datensatzes 40 ersetzen sollen). Bei dem in Fig. 3 dargestellten Ausführungsbeispiel ist dem produktiven Datensatz 40 der historisierte Datensatz 42 zugeordnet. Diese Zuordnung erfolgt unter Verwendung der in Fig. 1 dargestellten Zuordnungs-Komponente 19. Die Zuordnungs-Komponente 19 in Fig. 1 kann auf einem kryptographischen Mechanismus wie beispielsweise dem in der US 5,214,703 oder der EP 0 482 154 beschriebenen IDEA Verschlüsselungsmechanismus basieren.

Ein solcher Mechanismus gestattet die Implementierung einer Zuordnungs-Komponente 19, welche eine einmal festgelegte Zuordnung zwischen den produktiven Datensätzen 40, 40' usw. und den historisierten Datensätzen 42, 42', 42", usw. reproduzierbar beibehält.

Die Reproduzierbarkeit der Zuordnung ermöglicht eine Aktualisierung einzelner anonymisierter Datensätze in der Testdatenbank 26. Auf diese Weise lassen sich Datenmodifikationen im produktiven Umfeld in die Testdatenbank 26 einpflegen. Insbesondere muss gemäß diesem Aktualisierungsansatz der Inhalt der Testdatenbank 26 nicht jedes mal komplett neu erzeugt werden. Dies schont die vorhandenen Ressourcen und erhöht die Verfügbarkeit der produktiven Datenbanken 14.

Wie in Fig. 3 dargestellt, werden zur Erzeugung des anonymisierten Datensatzes 44 die Datenelemente mit den Kennungen 1 und 3 des produktiven Datensatzes 40 durch die korrespondierenden Datenelemente des historisierten Datensatzes 42 ersetzt. Genauer gesagt wird das Datenelement A durch das Datenelement M und das Datenelement C durch das Datenelement N ersetzt, um den produktiven Datensatz 40 zu anonymisieren. Die Datenelemente B, D, E und F des produktiven Datensatzes 40 bedürfen hingegen keiner Anonymisierung und werden unverändert in den anonymisierten Datensatz 44 übernommen. Deutlich zu erkennen ist in Fig. 3 der Sachverhalt, dass der anonymisierte Datensatz 44 dasselbe Format wie der produktive Datensatz 40 aufweist.

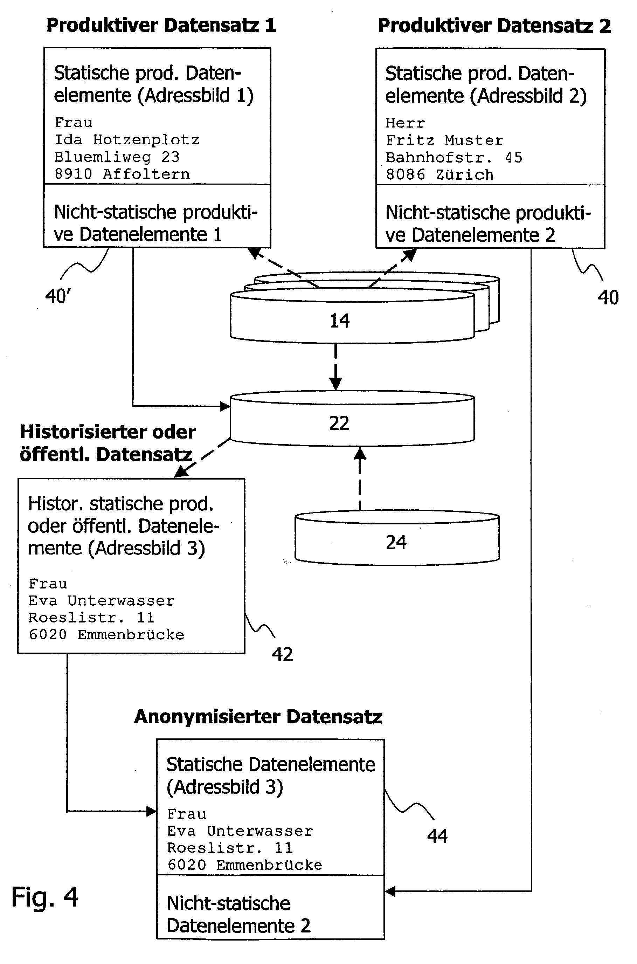

Fig. 4 zeigt in einer schematischen Darstellung ein weiteres Ausführungsbeispiel für die Erzeugung eines anonymisierten Datensatzes durch Kombination von Datenelementen eines produktiven Datensatzes mit Datenelementen eines weiteren (ggf. historisierten) produktiven Datensatzes.

Das in Fig. 4 gezeigte Ausführungsbeispiel betrifft das Erzeugen von anonymisierten Datensätzen für das Entwickeln und Testen von vor allem solchen Anwendungsprogrammen, welche die in den anonymisierten Datensätzen enthaltenen Datenelemente auf einer Anzeigeeinrichtung oder in Form einer Drucksache ausgeben. Genauer gesagt sollen anonymisierte Datensätze zur Verfügung gestellt werden, die das Entwickeln und Testen von adressbasierten Anwendungsprogrammen gestatten. Derartige Anwendungsprogramme dienen etwa dazu, einen adressierten Kontoauszug mit kurzlebigen und transaktionsbasierten nicht-statischen produktiven Daten (wie Kontoständen, Kontoumsätzen, usw.) und langlebigen statischen produktiven Daten (wie Kontonummer, Namens- und Adressangaben) zu erstellen. Es muss hierbei beispielsweise sichergestellt werden, dass sämtliche relevante Adressangaben innerhalb eines begrenzten Sichtfensters eines Kuverts dargestellt sind. Aus diesem Grund besteht die Anforderung, dass die anonymisierten Adressbilder hinsichtlich ihrer geometrischen Abmessungen ein getreues Abbild der produktiven Adressbilder sind. Aufgrund der Vertraulichkeit der nicht-statischen produktiven Daten (Bankgeheimnis) dürfen jedoch nicht die vollständigen produktiven Datensätze beim Erstellen von Probe-Kontoauszügen zu Entwicklungs- und Testzwecken verwendet werden. Vielmehr besteht die Aufgabe, den nicht-statischen produktiven Daten anonymisierte Adressbilder zuzuordnen.

Hierzu wird wiederum, wie in Fig. 4 dargestellt, in einem ersten Schritt eine Historisierungs-Datenbank 22 mit historisierten Datensätzen erstellt. Dies geschieht derart, dass eine benutzerselektierte Auswahl der in den produktiven Datenbanken 14 enthaltenen Adressbilder (also der statischen Datenelemente) in die Historisierungs-Datenbank 22 übergeführt werden. Zur Verbesserung des Anonymisierungsgrades werden ferner Adressbilder aus der öffentlich zugänglichen elektronischen Datenbank 24 (beispielsweise aus einem elektronischen Telefonbuch) in die Historisierungs-Datenbank 22 geladen. Ungefähr 10 % der Datensätze der Historisierungs-Datenbank 22 entstammen der öffentlich zugänglichen elektronischen Datenbank 24.

Gemäß einer Variante des in Fig. 4 dargestellten Ausführungsbeispiels werden lediglich die Datenelemente Name und Vorname aus den produktiven Datenbanken 14 in die Historisierungs-Datenbank 22 übergeführt. Dort werden diese beiden Datenelemente mit Adressangaben (z.B. Strasse, Ort, usw.) kombiniert, die der öffentlich zugänglichen elektronischen Datenbank 24 entstammen können. Zusätzlich können der öffentlich zugänglichen elektronischen Datenbank 24 noch komplette Adressbilder (einschließlich Vornamen und Nachnamen) zur Erzeugung historisierter Datensätze entnommen werden. Diese Maßnahme ist insbesondere dann zweckmäßig, wenn (zusätzlich zu aus den produktiven Datenbanken 14 ausgelesenen Datenelementen) noch weitere Datenelemente benötigt werden, um zu gewährleisten, dass in der Historisierungs-Datenbank 22 kein Datensatz mit einer eindeutigen Zeichenkettenlängenkombination auftritt.

Gemäß dem in Fig. 4 dargestellten Ausführungsbeispiel stimmen die historisierten Datensätze hinsichtlich der Zeichenkettenlängen-Statistik der Datenelemente Vorname und Nachname (entsprechende Datenelement-Kennungen finden intern Verwendung, sind in Fig. 4 aber nicht dargestellt) mit produktiven Datensätzen überein. Dies impliziert beispielsweise, dass es für das produktive Adressbild 1 des produktiven Datensatzes 40' mit einem dreizeichigen Vornamen (Ida) und einem 11 Zeichen umfassenden Nachnamen (Hotzenplotz) einen entsprechenden historisierten Datensatz 42 mit einem historisierten Adressbild gibt, das ebenfalls einen drei Zeichen umfassenden Vornamen (Eva) und einen 11 Zeichen umfassenden Nachnamen (Unterwasser) gibt. Für den zu erzeugenden anonymisierten Datensatz 44 und für Entwicklungs- und Testzwecke ist es hierbei unerheblich, ob die Datenelemente des Adressbildes des historisierten Datensatzes 42 der öffentlich zugänglichen elektronischen Datenbank 26 oder aber den produktiven Datenbanken 14 entstammen.

Ferner sind die statistischen Eigenschaften der Datensätze, Datenelemente und von Datenelementabschnitten in der Historisierungs-Datenbank 22 den statistischen Eigenschaften der Datensätze, Datenelemente und von Datenelementabschnitte in den produktiven Datenbanken 14 weitestgehend angenähert. Dies bezieht sich beispielsweise auf die statistischen Verteilungen der Zeichenkettenlängen und auch auf die statistischen Verteilungen der Anfangsbuchstaben wenigstens der Nachnamen. Diese Maßnahme erleichtert das Entwickeln und Testen von Anwendungsprogrammen, die beispielsweise Sortieralgorithmen oder ähnliche selektive Mechanismen umfassen.

Zum Erzeugen des in Fig. 4 dargestellten anonymisierten Datensatzes 44 wird zunächst ein Datensatz aus den produktiven Datenbanken 14 sowie genau ein zugeordneter Datensatz aus der Historisierungs-Datenbank 22 ermittelt. In dem Ausführungsbeispiel gemäß Fig. 4 ist dem produktiven Datensatz 40 der historisierte Datensatz 42 zugeordnet. Der historisierte Datensatz 42 umfasst (wenigstens) ein historisiertes Adressbild, welches zur Anonymisierung des produktiven Datensatzes 40 dessen produktives Adressbild ersetzt. Der zu erzeugende anonymisierte Datensatz 44 umfasst dann neben dem aus der Historisierungs-Datenbank 22 ausgelesenen Adressbild des Datensatzes 42 die nicht-statischen Datenelemente des produktiven Datensatzes 40. Erforderlichenfalls können einzelne nicht-statische produktive Datenelemente des produktiven Datensatzes 40 ebenfalls noch anonymisiert werden. Die hierzu erforderlichen (historisierten) Daten können dem historisierten Datensatz 42 entnommen oder anderweitig erzeugt werden.

Wie aus der obigen Beschreibung ersichtlich wurde, gestattet die Erfindung auf einfache Weise die Erzeugung anonymisierter Datensätze aus produktiven Datensätzen. Der Mechanismus ist robust und gewährleistet einen ausreichenden Anonymisierungsgrad. Insbesondere ermöglicht der Mechanismus die Beibehaltung der statistischen Eigenschaften der produktiven Daten im Entwicklungs- und Testumfeld. Dies erhöht die Zuverlässigkeit der zu entwickelnden und zu testenden Anwendungen.

Obwohl die Erfindung anhand mehrerer einzelner Ausführungsformen, die untereinander kombinierbar sind, erläutert wurde, sind zahlreiche Änderungen und Modifikationen denkbar. Die Erfindung kann daher, innerhalb des Umfangs der nachfolgenden Ansprüche, auch abweichend von den obigen Ausführungen praktiziert werden.

## Patentansprüche

1. Verfahren zum computergestützten Erzeugen von anonymisierten Datensätzen für das Entwickeln und Testen von Anwendungsprogrammen, die für den Einsatz in einem produktiven Umfeld (12) bestimmt sind, umfassend die Schritte:
- Bereitstellen wenigstens einer produktiven Datenbank (14) mit zu anonymisierenden produktiven Datensätzen, welche statische und nicht-statische Datenelemente enthalten, wobei die nicht-statischen Datenelemente von Anwendungsprogrammen im produktiven Umfeld (12) erzeugt und/oder bearbeitet werden und wobei die statischen Datenelemente im produktiven Umfeld (12) im Wesentlichen unveränderlich sind;
- Auslesen einer Mehrzahl von produktiven Datensätzen aus der produktiven Datenbank (14);
- Erzeugen von anonymisierten Datensätze durch Ersetzen wenigstens einiger der statischen Datenelemente eines ersten produktiven Datensatzes mit den entsprechenden statischen Datenelementen eines zweiten produktiven oder historisierten produktiven Datensatzes;
- Überführen der anonymisierten Datensätze in ein Entwicklungs- oder Testumfeld (27).

2. Verfahren nach Anspruch 1, ferner umfassend die Schritte:
- Bereitstellen statischer Datenelemente, die von außerhalb des produktiven Umfelds (12) bezogen wurden; und
- Erzeugen von anonymisierten Datensätzen durch Ersetzen wenigstens einiger der statischen Datenelemente des ersten oder eines dritten produktiven Datensatzes mit entsprechenden statischen Datenelementen von außerhalb des produktiven Umfelds.

3. Verfahren nach Anspruch 2, **dadurch gekennzeichnet,**
**dass** weniger als ungefähr 25% der anonymisierten Datensätze auf der Grundlage der von außerhalb des produktiven Umfelds (12) bezogenen statischen Datenelemente erzeugt werden.

4. Verfahren nach einem der vorhergehenden Ansprüche, ferner umfassend den Schritt des Historisierens zumindest der statischen Datenelemente der produktiven Datensätze zur Erzeugung historisierter produktiver Datensätze.

5. Verfahren nach einem der vorhergehenden Ansprüche, ferner umfassend die Schritte,
- Auslesen der produktiven Datensätze in flache Dateien; und
- Bearbeiten der in die flachen Dateien ausgelesenen produktiven Datensätze zur Erzeugung der anonymisierten Datensätze.

6. Verfahren nach einem der vorhergehenden Ansprüche, **dadurch gekennzeichnet,**
**dass** die anonymisierten Datensätze in Form von flachen Dateien in das Entwicklungs- oder Testumfeld (27) geladen werden

7. Verfahren nach einem der vorhergehenden Ansprüche, ferner umfassend den Schritt des Ladens der anonymisierten Datensätze in eine Entwicklungs- und Testdatenbank (26), welche dieselbe Struktur wie die produktive Datenbank (14) aufweist.

8. Verfahren nach einem der vorhergehenden Ansprüche, **dadurch gekennzeichnet, dass** es sich bei den nicht-statischen Datenelementen um numerische Werte handelt.

9. Verfahren nach einem der vorhergehenden Ansprüche, **dadurch gekennzeichnet, dass** es sich bei den statischen Datenelementen um identitätsbezogene Daten handelt.

10. Verfahren nach einem der vorhergehenden Ansprüche, ferner umfassend die Schritte:
- Bereitstellen von Selektionskriterien; und
- selektives Auslesen der die Selektionskriterien erfüllenden produktiven Datensätze oder produktiven Datenelemente aus der produktiven Datenbank (14).

11. Verfahren nach einem der vorhergehenden Ansprüche, **dadurch gekennzeichnet,**
**dass** das Auslesen der produktiven Datensätzen aus der produktiven Datenbank (14) unterbrechungslos derart erfolgt, dass eine Momentaufnahme des Datenbankinhalts oder eines Teils hiervon erhalten wird.

12. Verfahren nach einem der vorhergehenden Ansprüche, ferner umfassend den Schritt des Aktualisierens der anonymisierten Datensätze auf der Grundlage von Änderungen der produktiven Datensätze.

13. Verfahren nach einem der vorhergehenden Ansprüche, **dadurch gekennzeichnet, dass** die statischen Datenelemente und nicht-statischen Datenelemente der produktiven Datensätze in getrennten produktiven Datenbanken (14) enthalten aber miteinander verknüpft sind.

14. Verfahren nach einem der vorhergehenden Ansprüche, **dadurch gekennzeichnet, dass** eine Mehrzahl von produktiven Datensätzen mit identischen statischen Datenelementen aber unterschiedlichen nicht-statischen Datenelementen existiert.

15. Computerprogrammprodukt mit Programmcodemitteln zum Durchführen des Verfahrens nach einem der Ansprüche 1 bis 14, wenn das Computerprogrammprodukt auf einem oder mehreren Computern ausgeführt wird.

16. Computerprogrammprodukt nach Anspruch 15, abgespeichert auf einem computerlesbaren Datenträger.

17. Computersystem zum Erzeugen von anonymisierten Datensätzen für das Entwickeln und Testen von Anwendungsprogrammen, die für den Einsatz in einem produktiven Umfeld (12) bestimmt sind, umfassend:
- wenigstens eine produktive Datenbank (14) mit zu anonymisierenden produktiven Datensätzen, welche statische und nicht-statische Datenelemente enthalten, wobei die nicht-statischen Datenelemente von Anwendungsprogrammen im produktiven Umfeld (12) erzeugt und/oder bearbeitet werden und wobei die statischen Datenelemente im produktiven Umfeld (12) im Wesentlichen unveränderlich sind;
- einen Computer (20) zum Auslesen einer Mehrzahl von produktiven Datensätzen aus der produktiven Datenbank (14) und zum Erzeugen von anonymisierten Datensätze durch Ersetzen wenigstens einiger der statischen Datenelemente eines ersten produktiven Datensatzes mit den entsprechenden statischen Datenelementen eines zweiten produktiven oder historisierten produktiven Datensatzes;
- eine Schnittstelle (30) zum Überführen der anonymisierten Datensätze in ein Entwicklungs- oder Testumfeld (27).

18. Computersystem nach Anspruch 17, ferner umfassend eine Historisierungsdatenbank (22) mit historisierten produktiven Datensätzen.
